Europäisches Patentamt

European Patent Office

Office européen des brevets

(11) Veröffentlichungsnummer: **0 417 450 B1**

## (12) EUROPÄISCHE PATENTSCHRIFT

(45) Veröffentlichungstag der Patentschrift: **15.06.94**

(21) Anmeldenummer: **90114640.7**

(22) Anmeldetag: **31.07.90**

(51) Int. Cl.⁵: **A22C  25/16**

(54) **Einrichtung zum Filetieren von Fischen.**

(30) Priorität: **09.09.89 DE 3930195**

(43) Veröffentlichungstag der Anmeldung:
**20.03.91 Patentblatt  91/12**

(45) Bekanntmachung des Hinweises auf die
Patenterteilung:
**15.06.94 Patentblatt  94/24**

(84) Benannte Vertragsstaaten:
**DE ES FR GB NL**

(56) Entgegenhaltungen:
**DE-A- 1 454 087       DE-A- 2 221 269
DE-B- 2 350 561       DE-C- 3 321 727
DE-C- 3 723 860       GB-A- 872 801
GB-A- 874 460         GB-A- 2 089 642
NL-A- 6 615 319**

(73) Patentinhaber: **NORDISCHER MASCHINENBAU
RUD. BAADER GMBH + CO KG
Geniner Strasse 249
D-23560 Lübeck(DE)**

(72) Erfinder: **Evers, Reinhard, Dipl.-Ing.
Jahnstr. 5
D-2406 Stockelsdorf(DE)**
Erfinder: **Wenzel, Werner, Dipl.-Ing.
Doberanweg 8
D-2400 Lübeck(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Abtrennen des Muskelfleisches von dem Grätengerüst geköpfter und gegen ihre Schwimmrichtung beförderter Fische in Form von Filets mittels Schneidwerkzeugen mit jeweils Paaren von im wesentlichen parallelen Kreismessern zum Freischneiden der Bauchspeichen und der Rückenspeichen, sowie dachförmig zueinander angeordneter Kreismesser zum Freischneiden der Rippen bzw. seitlichen Wirbelfortsätze, und mit Führungen, die in die jeweils von den Schneidwerkzeugen erzeugten Einschnitte eingreifen.

Eine derartige Einrichtung ist beispielsweise aus der DE-OS 1 454 087 bekannt. Die dort beschriebene Filetiereinrichtung weist jeweils aus Paaren von Kreismessern bestehende Schneidwerkzeuge zum Freischneiden des Muskelfleisches von den Bauch- und Rückenspeichen, den Rippen bzw. seitlichen Wirbelfortsätzen und den Flanken des Rückgrates auf. Dabei erfolgt die Steuerung des Schneidwerkzeuges zum Freischneiden der Rippen bzw. seitlichen Wirbelfortsätze durch in Grundstellung den wirksamen Teil der Schneiden der Kreismesser abdeckende Klappen. Die Fische werden durch einen Schubsattelförderer durch die Einrichtung befördert.

Diese Einrichtung erzielt zwar ein qualitativ einwandfreies Ergebnis, sie ist aber aufgrund der Art der Förderung leistungsschwach und von der Anzahl der verwendeten Werkzeuge her aufwendig.

Aus der DE-PS 37 23 860 ist weiter eine Einrichtung bekannt, die eine Filetiereinrichtung mit einer Führungsbahn für die Fische in senkrechter Anordnung betrifft, wobei jeweils ein Paar die Bauchspeichen und die Rückenspeichen freischneidender Schneidwerkzeuge vorgesehen sind. Letzteres ist dabei radial verdrängbar und so angeordnet, daß die Einschnitte der Schneidwerkzeuge im Schwanzbereich des Fisches zu beiden Seiten der Wirbelsäule einander treffen, so daß in diesem Bereich ein vollständiger Freischnitt der Filets erfolgt. Aufgrund einer vorgesehenen radialen Verdrängbarkeit des Schneidwerkzeuges zum Freischneiden der Rückenspeichen wird dieses im Bereich der Bauchhöhle durch die dort an der Wirbelsäule ansetzenden Rippen bzw. seitlichen Wirbelfortsätze verdrängt, so daß die Filets an diesen Teilen des Grätengerüstes haften bleiben. Die vollständige Trennung erfolgt durch ein als Schabewerkzeug ausgebildetes Rippenwerkzeug das den erstgenannten Schneidwerkzeugen folgt und mit seinen Schnittebenen an die Einschnitte zu beiden Seiten der Rückenspeichen anschließt.

Bei dieser Einrichtung ist nachteilig, daß sich die Schneidwerkzeuge zum Frischneiden der Bauchspeichen und der Rückenspeichen auf das Dickenmaß der Wirbel im Schwanzbereich einstellen, so daß auf den Flanken der Bauch- und Rückenspeichen Filetfleisch verbleibt, das dessen Ausbeute entsprechend mindert. Dieser Ausbeuteverlust ist insbesondere bei der Verarbeitung von hochrückigen Fischen sehr hoch, da hier die Schnittflächen im Vergleich zu der Filetdicke sehr groß sind.

Aus der DE-PS 23 50 561 ist weiter eine Vorrichtung entnehmbar mit je einem Paar maschinenfest gelagerter Bauchfiletiermesser und gegen Federkraft verdrängbarer Rückenfiletiermesser. Der Abstand der Messerpaare ist dabei so gewählt, daß ihre Schnittebenen die Flanken der Bauch- und Rückenspeichen tangieren. Die diesem Abstand gegenüber dickeren Wirbel des Rückgrates bewirken daher, daß die Rückenfiletiermesser radial verdrängt werden, so daß die Filets im Schwanzbereich mit den Flanken des Rückgrates zunächst verbunden bleiben. Diese Verbindungen werden anschließend durch ein spezielles Trennwerkzeug getrennt, welches aus einem Paar Messerklingen besteht, die sich zueinander unter dachförmiger Anordnung in die Bahn der Rippen erstrecken und im Bereich von Transportscheiben angeordnet sind, die an dem Grätengerüst des Fisches fördernd angreifen.

Dieses Konzept folgte demjenigen aus der DE-OS 22 21 269, das sich aufgrund nicht ausreichend wirksamer Förderung als nicht realisierbar erwiesen hatte. Darüberhinaus haftet diesem Konzept, wie auch dem aus der DE-PS 23 50 561, der Nachteil an, daß bei Verwendung feststehender Messerklingen insbesondere bei den heute üblichen Durchsatzleistungen und Ausbeuten ein sicherer Durchlauf infolge der natürlichen Toleranzen in der Grätenstruktur nicht gewährleistbar ist und weiter auch die erzielbare Schnittqualität nicht befriedigt.

Es ist daher die Aufgabe der Erfindung, eine Einrichtung zum Filetieren von Fischen anzugeben, die ähnlich denjenigen nach dem Stand der Technik kompakt baut, durch Reduzierung der Anzahl der verwendeten Werkzeuge kostengünstig herstellbar ist und dabei einen sicheren Durchlauf bei hoher Ausbeute gewährleistet.

Diese Aufgabe wird erfindungsgemäß dadurch gelöst, daß die Führungen im Bereich des Schneidwerkzeuges zum Freischneiden der Rippen bzw. der seitlichen Wirbelfortsätze aus Führungselementen mit jeweils zu den Innenflächen der Kreismesser dieses Schneidwerkzeuges parallel angeordneten Führungsflächen bestehen, die in einer ersten Bewegung gegen Federkraft jeweils parallel zu dem benachbarten Kreismesser verdrängbar sind, zum Freilegen eines Teils von dessen Umfangsschneide (39), und in einer zweiten Bewegung senkrecht zu diesem durch Steuerung aufeinander zubewegbar sind, zur Bildung eines Spaltes zwischen Führungsfläche (37) und benachbartem Kreismesser (7).

Die damit erzielbaren Vorteile bestehen insbesondere darin, daß mit der vorgeschlagenen Einrichtung eine Schnittqualität erzielbar ist, die nicht nur eine optische Aufwertung des Produktes bewirkt, sondern z. B. bei der Bearbeitung von Flachfischen auch, daß die Filets ohne Gefahr einer Spaltung im Bereich der Mittellinie enthäutbar sind. Darüberhinaus ist der Aufwand zur Herstellung der Einrichtung dadurch reduziert, daß das Schneidwerkzeug zum Freischneiden der Rippen bzw. seitlichen Wirbelfortsätze zusätzlich für das Freischneiden der Filets von den Flanken der Wirbelsäule im Schwanzbereich herangezogen wird.

Zur Vermittlung dieser Doppelfunktion können die Führungselemente zweckmäßigerweise derart angeordnet sein, daß sie in ihrer Grundstellung mindestens die wirksamen Teile der Schneiden der Kreismesser vollständig abdecken, wobei ihre Führungskanten jeweils im wesentlichen die Tangente an den im Bereich des Firstpunktes befindlichen Teil der Schneide bilden. Dabei kann die Steuerung dadurch erfolgen, daß vor dem Schneidwerkzeug zum Freischneiden der Rippen bzw. seitlichen Wirbelfortsätze ein die Bahn der Bauchspeichen überwachender Sensor vorgesehen ist, dessen Signal zur Steuerung der Führungselemente in die Aktivstellung herangezogen wird.

Gemäß einer vorteilhaften Ausführung kann der Sensor als photoelektrisch wirksamer Durchlichtsensor konzipiert sein, wobei der Sensor in einer den Stegelementen vorgelagerten und mit diesen fluchtenden Führung aus einem Paar einen Spalt für den Durchgang der Bauchspeichen zwischen sich belassender Stegelemente untergebracht ist und einen Lichtsender und einen Lichtempfänger umfaßt, die unter gegenseitiger Gegenüberstellung zu beiden Seiten des Spaltes in den Stegelementen angeordnet sind.

Zur Vermeidung der Verschmutzung und unkontrollierbarer mechanischer Belastungen der Sensorelemente können die Stegelemente der Führung aus einem verschleißarmen Kunststoff gefertigt sein, in den die Sensorelemente derart eingesetzt sind, daß diese gegenüber den den Spalt zwischen den Stegelementen begrenzenden Flächen derselben abgedeckt sind, so daß das Sensorlicht durch die abdeckende Schicht hindurchtritt.

Zwecks Anpassung des Steuerweges der Führungselemente in ihre Aktivstellung, d. h. des Maßes des Spaltes zwischen den Führungsflächen derselben und der Innenfläche jedes Schneidwerkzeuges zum Freischneiden der Rippen bzw. der seitlichen Wirbelfortsätze an die Größe des jeweils in Bearbeitung befindlichen Fisches kann der Steuerweg der Führungselemente jeweils in Abhängigkeit von der Dicke der Wirbelsäule begrenzt werden.

Um eine reibungsarme Verdrängung der Wirbelsäule unter die Kreismesser des Schneidwerkzeuges zum Freischneiden der Rippen bzw. der seitlichen Wirbelfortsätze und damit der Führungselemente des Führungsteils in eine von dem jeweiligen Durchmesser der Wirbelkörper abhängige Stellung zu gewährleisten, sind in den Ebenen der in die Einschnitte neben den Rückenspeichen eingreifenden Stegelemente und im Bereich gegenüber den Führungselementen des Führungsteils ein Paar kegelscheibenförmiger Transportscheiben mit griffig gestalteter Peripherie vorgesehen, wobei deren Anordnung so getroffen ist, daß sie die Führungskanten der Führungselemente mit dem der Bahn der Fische zuweisenden Teil der Peripherie im wesentlichen tangieren. Zum Zwecke der Steuerung der Rippen unter die diese freischneidenden Kreismesser können im Bereich unmittelbar vor jedem derselben ein Satz von außen in die Bahn der Fischrümpfe und gegen deren Flanken zusammen mit der Ansteuerung der Führungselemente in ihre Aktivstellung einsteuerbarer Andrücklamellen vorgesehen sein. Eine Berücksichtigung der anatomischen Gegebenheiten kann dabei dadurch erfolgen, daß die einzelnen Andrücklamellen jedes Satzes zeitlich gestaffelt einsteuerbar ausgeführt sind.

Die Erfindung wird nachfolgend anhand des in der Zeichnung dargestellten Ausführungsbeispiels näher erläutert. Es zeigt jeweils in vereinfachter Darstellung

Fig. 1      eine Gesamtansicht der erfindungsgemäßen Einrichtung in axonometrischer Darstellung,

Fig. 2      einen Querschnitt durch die Einrichtung nach Fig. 1 im Bereich der Transportscheiben und des Schneidwerkzeug für die Rippen vor Ankunft eines zu bearbeitenden Fisches,

Fig. 3      den Querschnitt entsprechend Fig. 2, als vergrößerter Ausschnitt dargestellt,

Fig. 4      einen Querschnitt durch die Einrichtung entsprechend Fig. 2 nach Ankunft eines Fisches,

Fig. 5      den Querschnitt entsprechend Fig. 4 als vergrößerter Ausschnitt dargestellt,

Fig. 6      einen Querschnitt durch die Einrichtung entsprechend Fig. 2 nach Ankunft des Bauchhöhlenendes eines Fisches,

Fig. 7      den Querschnitt entsprechend Fig. 6 als vergrößerter Ausschnitt dargestellt,

Fig. 8      eine Seitenansicht eines Flachfisch-Skelettes.

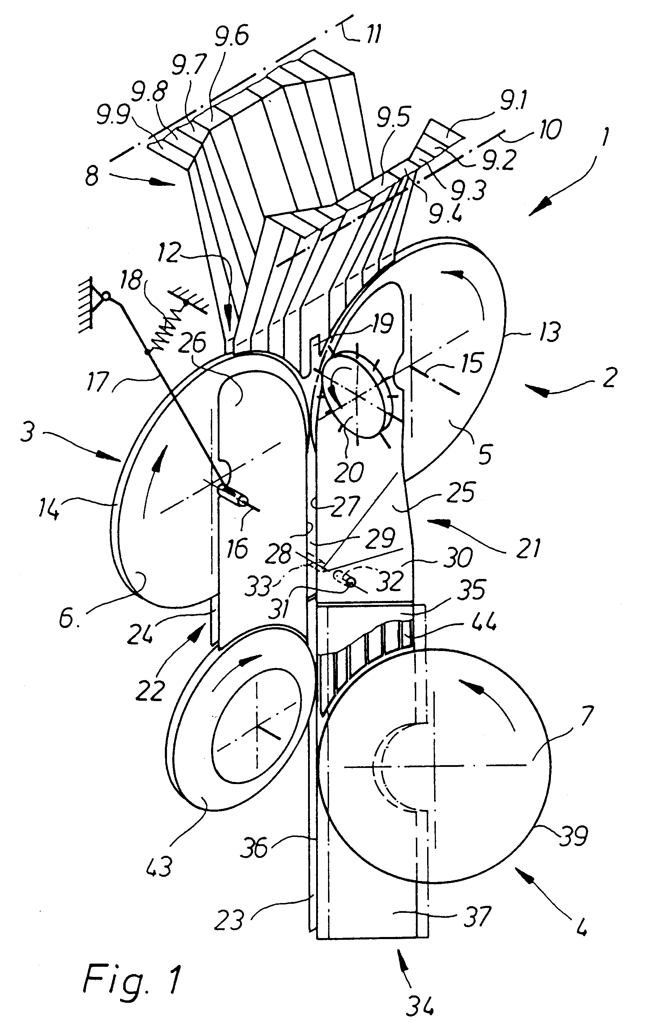

Die erfindungsgemäße Filetiereinrichtung 1 ist in einem nicht näher dargestellten Gestell untergebracht und umfaßt als Hauptaggregate einander entsprechend Fig. 1 zugeordnete Schneidwerkzeuge 2, 3 und 4 zum Freischneiden der Bauchspeichen der Rückenspeichen und der Rippen bzw. seitlichen Wirbelfortsätze, wobei diese Schneidwerkzeuge 2, 3 und 4 jeweils Paare von auf geeignete Weise angetriebenen Kreismessern 5 , 6 und 7 umfassen. Vor den Schneidwerkzeugen 2 und 3 befindet sich ein Eingabetrichter 8 , der aus einer Anzahl, beispielsweise neun Paaren von symmetrisch zueinander zu beiden Seiten der Fischbahn angeordneten Führungsklappen 9.1 bis 9.9 besteht. Diese sind um horizontale Achsen 10 bzw. 11 schwenkbar gelagert und miteinander in bekannter, nicht dargestellter Weise synchron verdrängbar gekoppelt und durch Federkraft gegeneinander gehalten. In der Ruhestellung der Führungsklappen 9.1 bis 9.9 bleibt an ihren unteren Enden ein paralleler Spalt 12 belassen. Die unteren Enden der Führungsklappen 9.1 bis 9.9 stehen den Umfangsschneiden 13 bzw. 14 der Kreismesser 5 und 6 der Schneidwerkzeuge 2 und 3 unmittelbar gegenüber und sind entsprechend Fig. 1 so ausgeformt, daß sie der Kreiskontur der Kreismesser 5 und 6 folgen . Jedes der Kreismesser 5 und 6 ist für sich gelagert. Dabei sind die Achsen 15 der Kreismesser 5 gestellfest und die Achsen 16 der Kreismesser 6 an einer Schwinge 17 gelagert, welche durch eine Feder 18 gegen einen Anschlag in die Bahn der Fische eingeschwenkt gehalten wird. Jede Führungsklappe 9.5 des mittleren Paares der den Eingabetrichter 8 bildenden Führungsklappen ist im Bereich der unteren Enden mit einer Aussparung 19 versehen, durch die jeweils ein Stachelrad 20 in den Eingabetrichter 8 hindurchgreift. Die Stachelräder 20 werden auf geeignete Weise angetrieben und sind an nicht gezeigten, gegen Federkraft nach außen schwenkbaren Schwingen gelagert.

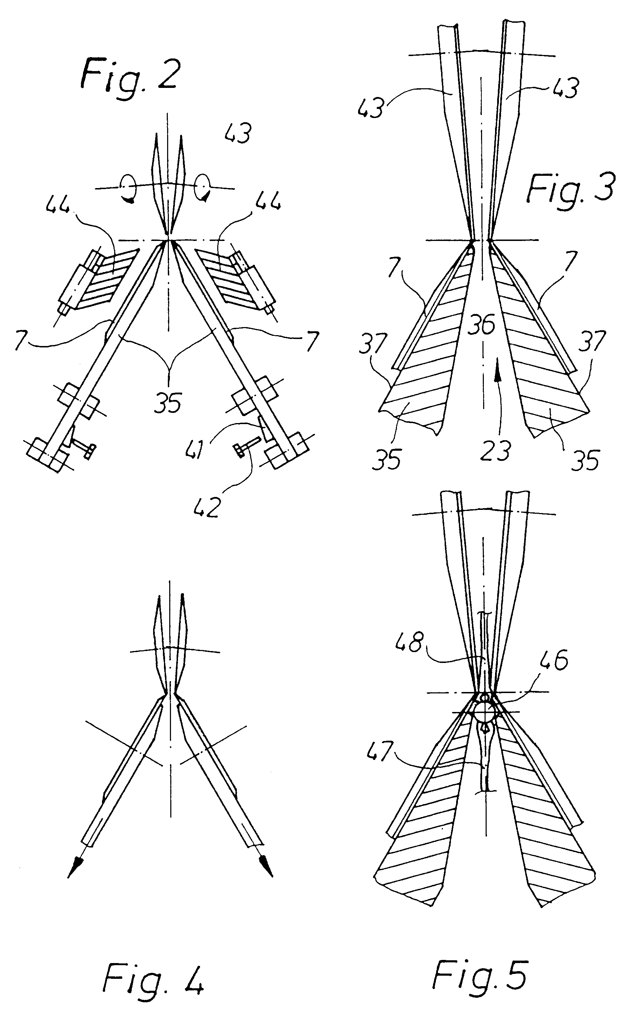

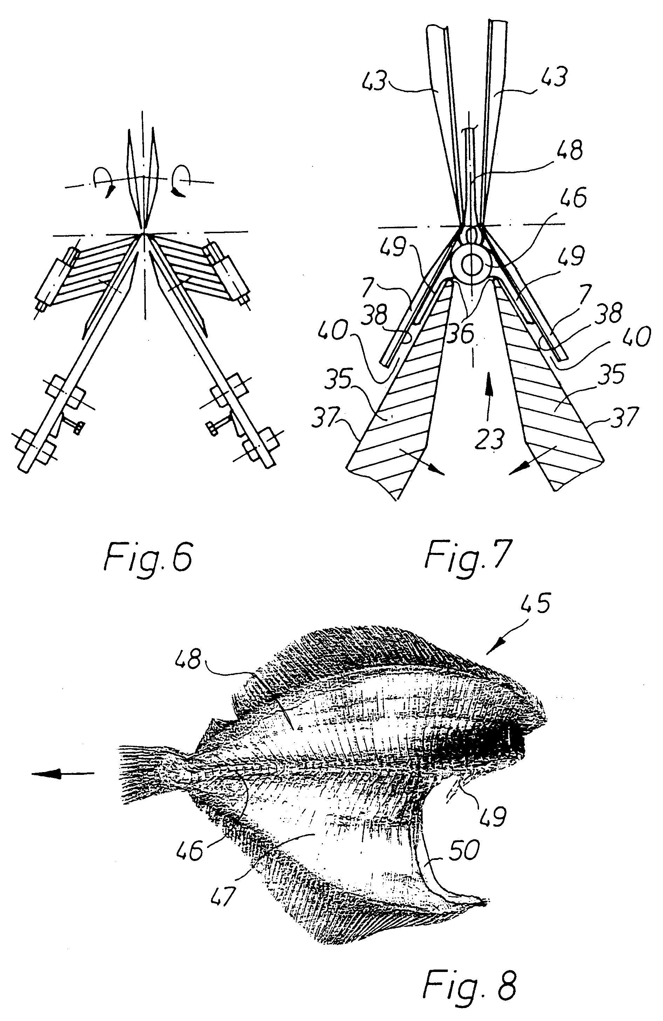

Die Führung der Fischrümpfe 45 zwischen den Schneidwerkzeugen 2 und 3 einerseits und dem Schneidwerkzeug 4 andererseits erfolgt mittels je eines Paares neben den Bauchspeichen eingreifender Führungen 21 und neben den Rückenspeichen eingreifender Führungen 22 , die jeweils einen Spalt 23 bzw. 24 für den Durchlaß der Bauchspeichen 47 bzw. Rückenspeichen 48 zwischen sich belassen. Die Führungen 21 und 22 werden jeweils aus zwei Stegelementen 25 bzw. 26 gebildet, die jeweils an der Außenflanke des zugehörigen Kreismessers 5 bzw. 6 des Schneidwerkzeuges 2 bzw. 3 anliegen und Führungskanten 27 bzw. 28 aufweisen, die einander unter Bildung eines seitlichen Spaltes 29 für den Durchlaß der Rippen 49 bzw . seitlichen Wirbelfortsätze gegenüberliegen und im wesentlichen tangential zu den Umfangsschneiden 13 bzw. 14 ausgerichtet sind. Die zunächst im wesentlichen parallel zueinander verlaufenden Außenflächen der Stegelemente 25 sind zu dem Schneidwerkzeug 4 hin zu einem dachförmigen Endbereich 30 verformt, dessen Winkelstellung der der Kreismesser 7 des Schneidwerkzeuges 4 entspricht. In diesem Endbereich 30 ist ein Sensor 31 aus einem Lichtsender 32 und einem Lichtempfänger 33 untergebracht so, daß sich diese Teile zu beiden Seiten des Spaltes 23 einander gegenüberliegen. Dabei ist die Anordnung wie aus Fig. 4 ersichtlich so getroffen, daß die jeweilige Sensorfläche gegenüber den den Spalt 23 begrenzenden Flächen der Stegelemente 25 abgedeckt ist. Der dachförmige Endbereich 30 leitet in einen separaten Führungsteil 34 über, der aus einem Paar Führungselemente 35 gebildet wird, wobei jedes mit einer Führungskante 36 und einer Führungsfläche 37 versehen ist. Die Führungselemente 35 sind in zwei Freiheitsgraden bewegbar angebracht. Ausgangsstellung für diese Bewegbarkeit ist eine Ruhelage, in der die Führungskanten 36 die Führungskanten 27 der Stegelemente 25 fortführen und die Führungsflächen 37 an den Innenflächen 38 der Kreismesser 7 des Schneidwerkzeuges 4 anliegen. Die Umfangsschneiden 39 der Kreismesser 7 tangieren dabei die Führungskanten 27 . Nach dem ersten Freiheitsgrad ist jedes Führungselement 35, wie in Fig. 2 angedeutet, in den Schnittebenen der jeweils zugehörigen Kreismesser 7 gegen Federkraft verdrängbar, so daß ein Teil der Umfangsschneide 39 der Kreismesser 7 freigegeben wird. Nach dem zweiten Freiheitsgrad ist jedes Führungselement 35, wie in Fig. 3 angedeutet, in der verdrängten Stellung in eine solche steuerbar, in der zwischen Führungsfläche 37 jedes Führungselementes 35 und Innenfläche 38 jedes Kreismessers 7 ein Spalt 40 eröffnet wird. Zur Begrenzung dieses Steuerweges ist, wie aus den Figuren 2 und 6 ersichtlich, an der Innenseite jedes Führungselementen 35 ein Kurvenstück 41 angebracht, welches sich gegenüber einem einstellbaren, gestellfesten Anschlag 42 abstützt.

In den Ebenen der Stegelemente 26 ist ein Paar kegelscheibenförmiger Transportscheiben 43 vorgesehen, die an ihrem Umfang in nicht dargestellter Weise griffig ausgestaltet und auf geeignete Art mit einer Umfangsgeschwindigkeit angetrieben sind, die der der Stachelräder 20 im wesentlichen entspricht. Die Transportscheiben 43 sind so angebracht, daß sie mit ihrem Umfang die Führungskanten 36 der in Ruhelage befindlichen Führungselemente 35 annähernd tangieren.

Unmittelbar vor jedem Kreismesser 7 des Schneidwerkzeuges 4 und über der Bahn der Fischrümpfe ist ein aus Gründen der Übersichtlichkeit in Fig. 1 nur angedeutet dargestellter Satz Andrücklamellen 44 angeordnet. Diese sind durch nicht gezeigte Steuermittel aus einer den Fisch durchlassenden Ruhestellung in eine Aktivstellung steuerbar, in der sie mit den Flanken des Fisches federnd verdrängbar in Kontakt zu treten vermögen.

Die Wirkungsweise der erfindungsgemäßen Einrichtung wird nachfolgend anhand des Durchlaufs eines Fisches erläutert:

Der zu filetierende Fischrumpf 45 wird mit dem Schwanz voraus und mit seiner Symmetrieebene parallel zu dem Spalt 12 in den Eingabetrichter 8 gegeben. Dabei wird er am Grunde desselben zunächst im Bereich seiner Schwanzflosse durch das Paar Stachelräder 20 erfaßt und in den Eingabetrichter 8 hineingezogen, wobei die Führungsklappen 9.1 bis 9.9 sich an den Fischkörper unter Zentrierung desselben anschmiegend paarweise synchron verdrängt werden. Bei Durchtritt der Schwanzflosse des Fisches durch den Spalt 12 der Führungsklappen 9.1 bis 9.9. erfolgt durch die Schneidwerkzeuge 2 und 3 ein Einschnitt zu beiden Seiten der Bauchspeichen 47 bzw. Rückenspeichen 48 bis an die Wirbelsäule 46 heran, wobei das Schneidwerkzeug 3 entsprechend dem jeweiligen Dickenmaß der Wirbelkörper der Wirbelsäule 46 nach außen gedrängt wird. In die entstandenen Einschnitte dringen nun die Stegelemente 25 und 26 der Führungen 21 bzw. 22 ein, die in ihrem Auflaufbereich ausgeschärft sind, um das freigeschnittene Filetfleisch widerstandslos aufzusammeln.

Im weiteren Verlauf des Filetierprozesses laufen die freigeschnittenen Filetteile an der Bauchseite auf den dachförmigen Endbereich 30 der Stegelemente 25 auf, so daß eine entsprechende Ausbreitung dieser Filetteile erfolgt. Diese werden so in den Bereich der Führungselemente 35 übergeführt, deren Führungskanten 36 die Führung übernehmen. Die über diesem Übergangsbereich befindlichen Andrücklamellen 44 sind in dieser Phase in Ruhestellung gehalten und daher außer Kontakt mit dem Fisch. Dieser gelangt so in den Bereich der Transportscheiben 43 , die nunmehr die Weiterführung des Fisches sicherstellen, indem sie mit ihrer griffigen Peripherie am Grunde der von dem Schneidwerkzeug 3 erzeugten Einschnitte, d. h. an den Wirbelkörpern der Wirbelsäule 46 angreifen. Gleichzeitig bewirkt die maschinenfeste Anbringung der Achse der Transportscheiben 43, daß auf die Wirbelsäule 46 ein Druck ausgeübt wird, der diese unter die bis dahin verfolgte Bahn drängt. Dabei werden die Führungselemente 35 in den Schnittebenen der Kreismesser 7 des Schneidwerkzeuges 4 in die in Fig. 1 gestrichelt dargestellte Lage verdrängt, so daß der der Bahn der Fische zuweisende Teil der Umfangsschneiden 39 der Kreismesser 7 freigelegt wird, was bewirkt, daß die noch bestehende Verbindung der Filets mit den Flanken der Wirbelsäule 46 getrennt wird. Dabei verhindern an diesen Kreismessern 7 befindliche Innenfasen, daß ein Anschnitt der Gräten erfolgen kann.

Kurz vor Auflaufen des Fischrumpfes 45 auf die Führungselemente 35 hatte der in dem Spalt 23 zwischen diesen und den Stegelementen 25 geführte, von dem Schneidwerkzeug 2 freigeschnittene und die Bauchspeichen 47 beinhaltende Grätenstreifen bewirkt, daß der Lichtstrahl des Sensors 31 unterbrochen wurde. Im Laufe der weiteren Förderung erreicht nun das vorauslaufende Bauchhöhlenende mit seinem Stützknochen 50 den Sensor 31 , wobei die Ankunft dieses Teils des Fisches die Unterbrechung des Lichtstrahls beendet. Das dadurch von dem Sensor 31 abgegebene Signal wird unter einer die baulichen Gegebenheiten und die Fördergeschwindigkeit berücksichtigenden Verzögerung derart ausgewertet, daß die Führungselemente 35 im Augenblick der Ankunft des ersten Rippenpaares im Bereich des Bauchhöhlenendes in eine Stellung gesteuert werden, die zwischen deren Führungsfläche 37 und den Innenflächen 38 der Kreismesser 7 einen Spalt 40 für den Durchlaß der Rippen 49 bzw. seitlichen Wirbelfortsätze eröffnen. Die Weite des Spaltes 40 wird dabei jeweils über das Kurvenstück 41 in Abhängigkeit von dem Weg der Verdrängung der Wirbelsäule 46 durch die Transportscheiben 43 , d. h. in Abhängigkeit von der Dicke der Wirbelkörper und damit von der Größe des Fisches geregelt.

Gleichzeitig mit der Steuerung der Führungselemente 35 zur Erzeugung des Spaltes 40 werden die Andrücklamellen 44 in Kontakt mit den Flanken des Fischrumpfes 45 eingesteuert, so daß die Rippen 49 sicher unter die Kreismesser 7 des Schneidwerkzeuges 4 gelangen. Dabei kann durch eine zeitlich verzögerte Einsteuerung der Andrücklamellen 44 von außen nach innen fortschreitend eine Verbesserung der Schnittqualität und der Ausbeute erreicht werden.

Zur Sicherstellung der Kontinuität der Förderung kann ein Paar weiterer Stachelräder 20 zwischen dem in Fig. 1 dargestellten und dem Paar Transportscheiben 43 angeordnet sein.

Zur weiteren Verbesserung der Ausbeute an Filetfleisch kann ein vor dem Filetieren jedes Fisches an diesem bestimmter Größen-, vorzugsweise Längenmeßwert dahingehend ausgewertet werden, daß unter Berücksichtigung desselben eine Voreinstellung des Abstandes der Kreismesser 5 und 6 der Schneidwerkzeuge 2 bzw. 3 erfolgt . Der besagte Meßwert kann in gleichem Sinne auch zur Beeinflussung des Zeitpunktes der Aktivierung des Schneidwerkzeuges 4 herangezogen werden.

# EP 0 417 450 B1

## Bezugszeichenaufstellung

| | | | | |
|---|---|---|---|---|
| 1 | Filetiereinrichtung | | 34 | Führungsteil |
| 2 | Schneidwerkzeug | | 35 | Führungselement |
| 3 | " " | | 36 | Führungskante |
| 4 | " " | | 37 | Führungsfläche |
| 5 | Kreismesser | | 38 | Innenfläche |
| 6 | " " | | 39 | Umfangsschneide |
| 7 | " " | | 40 | Spalt |
| 8 | Eingabetrichter | | 41 | Kurvenstück |
| 9.1 bis 9.9 | Führungsklappe | | 42 | Anschlag |
| | " " | | 43 | Transportscheibe |
| 10 | Achse | | 44 | Andrücklamelle |
| 11 | " " | | 45 | Fischrumpf |
| 12 | Spalt | | 46 | Wirbelsäule |
| 13 | Umfangsschneide | | 47 | Bauchspeiche |
| 14 | " " | | 48 | Rückenspeiche |
| 15 | Achse | | 49 | Rippe bzw. seitlicher Wirbelfortsatz |
| 16 | " " | | 50 | Stützknochen |
| 17 | Schwinge | | | |
| 18 | Feder | | | |
| 19 | Aussparung | | | |
| 20 | Stachelrad | | | |
| 21 | Führung | | | |
| 22 | " " | | | |
| 23 | Spalt | | | |
| 24 | " " | | | |
| 25 | Stegelement | | | |
| 26 | " " | | | |
| 27 | Führungskante | | | |
| 28 | " " | | | |
| 29 | Spalt | | | |
| 30 | dachförmiger Endbereich | | | |
| 31 | Sensor | | | |
| 32 | Lichtsender | | | |
| 33 | Lichtempfänger | | | |

## Patentansprüche

1. Vorrichtung zum Abtrennen des Muskelfleisches von dem Grätengerüst geköpfter und gegen ihre Schwimmrichtung beförderter Fische in Form von Filets, aufweisend Schneidwerkzeuge bestehend aus jeweils Paaren von im wesentlichen parallelen Kreismessern (23) zum Freischneiden der Bauchspeichen (47) und der Rückenspeichen (48), sowie von dachförmig zueinander angeordneten Kreismessern (4) zum Freischneiden der Rippen (49) bzw. seitlichen Wirbelfortsätze, und Führungen (21,22), die in die jeweils von den Schneidwerkzeugen erzeugten Einschnitte eingreifen, **dadurch gekennzeichnet,** daß die Führungen im Bereich des Schneidwerkzeuges zum Freischneiden der Rippen (49) bzw. der seitlichen Wirbelfortsätze aus Führungselementen (35) mit jeweils zu den Innenflächen (38) der Kreismesser (7) dieses Schneidwerkzeuges parallel angeordneten Führungsflächen (37) bestehen, die in einer ersten Bewegung gegen Federkraft jeweils parallel zu dem benachbarten Kreismesser (7) verdrängbar sind, zum Freilegen eines Teils von dessen Umfangsschneide (39), und in einer zweiten Bewegung senkrecht zu diesem durch Steuerung aufeinander zubewegbar sind, zur Bildung eines Spaltes zwischen Führungsfläche (37) und benachbartem Kreismesser (7).

2. Einrichtung nach Anspruch 1 , **dadurch gekennzeichnet,** daß die Führungselemente (35) derart angeordnet sind, daß sie in ihrer Grundstellung mindestens die wirksamen Teile der Schneiden (39) der Kreismesser (7) vollständig abdecken, wobei ihre Führungskanten (36) jeweils im wesentlichen die Tangente an den im Bereich des Firstpunktes befindlichen Teil der Schneide bilden.

3. Einrichtung nach Anspruch 1 oder 2 , **dadurch gekennzeichnet,** daß vor dem Schneidwerkzeug (4) zum Freischneiden der Rippen (49) bzw. seitlichen Wirbelfortsätze ein die Bahn der Bauchspeichen (47) überwachender Sensor (31) vorgesehen ist, dessen Signal zur Steuerung der Führungselemente (35) in die Aktivstellung herangezogen wird.

4. Einrichtung nach Anspruch 3 , **dadurch gekennzeichnet,** daß der Sensor (31) als photoelektrisch wirksamer Durchlichtsensor konzipiert ist.

5. Einrichtung nach Anspruch 4 , **dadurch gekennzeichnet,** daß der Sensor (31) in einer den Stegelementen (35) vorgelagerten und mit diesen fluchtenden Führung (21) aus einem Paar einen Spalt (23) für den Durchgang der Bauchspeichen (47) zwischen sich belassender Stegelemente (25) untergebracht ist und einen Lichtsender (32) und einen Lichtempfänger (33) umfaßt, die unter gegenseitiger Gegenüberstellung zu beiden Seiten des Spaltes (23) in den Stegelementen ( 25) angeordnet sind.

6. Einrichtung nach Anspruch 5 , **dadurch gekennzeichnet,** daß die Stegelemente (25) aus einem verschleißarmen Kunststoff gefertigt sind, und daß die Sensorelemente (32 und 33) gegenüber den den Spalt (23) begrenzenden Flächen der Stegelemente (25) abgedeckt sind.

7. Einrichtung nach Anspruch 1 oder 2 , **dadurch geknnzeichnet,** daß der Steuerweg der Führungselemente (35) in ihre Aktivstellung, d. h. das Maß des Spaltes (40) zwischen der Führungsfläche (37) der Führungselemente (35) und der Innenfläche (38) jedes Schneidwerkzeuges (4) in Abhängigkeit von der Dicke der Wirbelsäule (46) des jeweils in Bearbeitung befindlichen Fisches gesteuert wird.

8. Einrichtung nach Anspruch 1, **dadurch gekennzeichnet,** daß in den Ebenen der in die Einschnitte neben den Rückenspeichen (48) eingreifenden Stegelemente (26) und im Bereich gegenüber den Führungselementen (35) des Führungsteils (34) ein Paar kegelscheibenförmiger Transportscheiben (43) mit griffiggestalteter Peripherie vorgesehen sind, wobei deren Anordnung so getroffen ist, daß sie die Führungskanten (36) der Führungselemente (35) mit dem der Bahn der Fische zuweisenden Teil der Peripherie im wesentlichen tangieren.

9. Einrichtung nach Anspruch 1, **dadurch gekennzeichnet,** daß im Bereich unmittelbar vor jedem Kreismesser (7) des Schneidwerkzeuges (4) zum Freischneiden der Rippen (49) bzw. seitlichen Wirbelfortsätze ein Satz von außen in die Bahn der Fischrümpfe (45) und gegen deren Flanken zusammen mit der Ansteuerung der Führungselemente (35) in ihre Aktivstellung einsteuerbarer Andrücklamellen (44) vorgesehen ist.

10. Einrichtung nach Anspruch 9 , **dadurch gekennzeichnet,** daß die einzelnen Andrücklamellen (44) jedes Satzes zeitlich gestaffelt einsteuerbar ausgeführt sind.

## Claims

1. Device for the separation of muscle flesh in the form of fillets from the skeletons of beheaded fish conveyed against their direction of swimming, comprising cutting tools consisting of respective pairs of substantially parallel circular knives (2, 3) for the cutting free of the belly spokes (47) and the back spokes (48), as well as of circular knives (4), which are arranged in roof shape relative to one another, for the cutting free of the ribs (49) or lateral vertebral processes, and guides (21, 22) which engage in the incisions respectively produced by the cutting tools, characterised thereby that in the region of the cutting tool for the cutting free of the ribs (49) or the lateral vertebral processes the guides consist of guide elements (35) with guide surfaces (37), which are arranged respectively parallel to the inner surfaces (38) of the circular knives (7) of this cutting tool and which in a first movement can be urged against spring force respectively parallel to the adjacent circular knife (7) for the exposing of a part of the circumferential cutting edge (39) thereof and in a second movement perpendicularly to this can be moved towards one another, by controlling, for the formation of a gap between guide surface (37) and adjacent circular knife (7).

2. Equipment according to claim 1, characterised thereby that the guide elements (35) are arranged in such a manner that in their basic setting they completely cover at least the effective part of the cutting edge (39) of the circular knife (7), wherein their guide edges (36) respectively form substantially the tangents to the part of the cutting edge disposed in the region of the roof ridge point.

3. Equipment according to claim 1 or 2, characterised thereby that sensors (31), which monitor the path of the belly spokes (47) and the signal of which is drawn upon for controlling of the guide elements (35) into the active setting, is provided in front of the cutting tool (4) for the cutting free of the ribs (49) or the lateral vertebral processes.

4. Equipment according to claim 3, characterised thereby that the sensor (3) is conceived as a photoelectrically operable transmitted-light sensor.

5. Equipment according to claim 4, characterised thereby that the sensor is housed in a guide (21), which is premounted to the guide elements (35), aligned with these and consists of a pair of web elements (25) leaving a gap (23) for the passage of the belly spokes (47) between them, and comprises a light emitter (32) and a light receiver (33), which are arranged with mutual opposition at both sides of the gap (23) in the web elements (25).

6. Equipment according to claim 5, characterised thereby that the web elements (25) are made of a low-wear synthetic material and that the sensor elements (32 and 33) are shielded relative to the surfaces, which bound the gap (23), of the web elements (25).

7. Equipment according to claim 1 or 2, characterised thereby that the control path of the guide elements (35) in their active setting, i.e. the dimension of the gap (40) between the guide surface (37) of the guide elements (35) and the inner surface (33) of each cutting tool (4), is controlled in dependence on the thickness of the backbone (46) of the fish respectively disposed in processing.

8. Equipment according to claim 1, characterised thereby that a pair of transport discs (43) shaped like cone pulleys and with peripheries shaped to grip are provided in the planes of the web elements (26), which engage in the incisions near the back spokes (48), and in the region opposite the guide elements (35) of the guide part (34), wherein the arrangement of the transport discs is so effected that they substantially touch, by the part of the periphery facing the path of the fish, the guide edges (36) of the guide elements (35).

9. Equipment according to claim 1, characterised thereby that a set of presser plates (44), which are controllable into their operative setting from outside into the path of the fish carcasses (45) and against the flanks thereof together with the driving of the guide elements (35), is provided in the region directly in front of each circular knife (7) of the cutting tool (4) for the cutting free of the ribs (49) or vertebral processes.

**10.** Equipment according to claim 9, characterised thereby that the individual presser plates (44) of each set are constructed to be controllable in staggered in time.

**Revendications**

**1.** Dispositif de séparation de la chair des muscles, de la charpente d'arêtes de poissons décapités et convoyés contre le sens de nage, sous forme de filets, comprenant des outils de coupe comportant des paires de couteaux circulaires (2, 3) disposés sensiblement parallèlement et destinés à couper des arêtes abdominales (47) et les arêtes dorsales (48), et de couteaux circulaires (4) disposés l'un par rapport à l'autre comme un toit et destinés à découper les côtes (49) ou des apophyses latérales des vertèbres, ainsi que des guidages (21, 22) s'engageant dans les découpes effectuées par les outils de coupe, caractérisé en ce que les guidages sont constitués, au voisinage de l'outil de coupe destiné à la découpe des côtes (49) ou des apophyses latérales des vertèbres, d'éléments de guidage (35) présentant des faces de guidage (37) disposées parallèlement aux faces intérieures (38) des couteaux circulaires (7) de cet outil de coupe, susceptibles d'être éloignés l'un de l'autre, par un premier mouvement contre une force de rappel, en parallèle au couteau circulaire (7) voisin, afin de dégager une partie de son tranchant circulaire (39), et susceptibles d'être approchés l'un de l'autre, par un deuxième mouvement par une commande, perpendiculairement au couteau circulaire (7) afin de former une fente entre la face de guidage (37) et le couteau circulaire (7) voisin.

**2.** Dispositif selon la revendication 1, caractérisé en ce que les éléments de guidage (35) sont disposés de manière telle qu'ils couvrent, dans leur position de base, entièrement au moins les parties efficaces des tranchants (39) des couteaux circulaires (7), leurs bords de guidage (36) formant sensiblement une tangente à la partie du tranchant situé aux alentours du point de crête.

**3.** Dispositif selon la revendication 1 ou 2, caractérisé en ce qu'un capteur (31) destiné à surveiller la trajectoire des arêtes abdominales (47) est disposé devant l'outil de coupe (4) pour la découpe des côtes (49) ou des apophyses latérales des vertèbres, le signal du capteur étant utilisé pour la commande des éléments de guidage (35) vers la position active.

**4.** Dispositif selon la revendication 3, caractérisé en ce que le capteur (31) est conçu comme capteur photo-électrique à lumière transmise.

**5.** Dispositif selon la revendication 4, caractérisé en ce que le capteur (31) est disposé dans un guidage (21) formé par une paire d'éléments d'entretoises (25) espacés l'un de l'autre de manière à laisser une fente (23) entre eux pour le passage des arêtes abdominales (47), le guidage étant aligné aux, et disposés en amont des, éléments d'entretoises, et en ce que le capteur (31) comprend un émetteur de lumière (32) et un récepteur de lumière (33) disposés face à face et de part et d'autre de la fente (23) dans les éléments d'entretoises (25).

**6.** Dispositif selon la revendication 5, caractérisé en ce que les éléments d'entretoises (25) sont réalisés en un matériau synthétique résistant à l'usure et en ce que les éléments de capteur (32 et 33) sont couverts par rapport aux faces des éléments d'entretoises (25) limitant la fente (23).

**7.** Dispositif selon la revendication 1 ou 2, caractérisé en ce que le chemin de commande des éléments de guidage (35) vers leur position active, c'est-à-dire l'ouverture de la fente (40) entre la face de guidage (37) des éléments de guidage (35) et la face intérieure (38) de chacun des outils de coupe (4), est commandé en fonction de l'épaisseur de la colonne vertébrale du poisson particulier en cours de découpage.

**8.** Dispositif selon la revendication 1, caractérisé en ce qu'une paire de disques de transport (43) ayant la forme d'un disque conique et ayant une périphérie frottante, est prévue dans les plans des éléments d'entretoise (26) s'engageant dans les découpes à côté des arêtes dorsales (48), en face des éléments de guidage (35) de la partie de guidage (34), et disposé de façon que la partie de la périphérie orientée vers la trajectoire des poissons est tangente avec les bords de guidage (36) des éléments de guidage (35).

9. Dispositif selon la revendication 1, caractérisé en ce qu'un ensemble de lames-presseur (44), susceptible d'être commandé, en même temps que la commande des éléments de guidage (35), de l'extérieur vers leur position active dans la trajectoire des troncs de poissons (45) contre leurs flancs, est disposé dans un secteur immédiatement devant chacun des couteaux circulaires (7) des outils de coupe (4) destinés à la découpe des côtes (49) ou des apophyses latérales des vertèbres.

10. Dispositif selon la revendication 9, caractérisé en ce que les lames-presseur (44) de chacun des ensembles sont formées chacune de manière à pouvoir être commandées indivuellement dans le temps.

Fig. 1

Fig. 2

Fig. 3

Fig. 4

Fig.5

*Fig. 6*

*Fig. 7*

*Fig. 8*